(19)

Europäisches
Patentamt
European
Patent Office
Office européen
des brevets

(11)  **EP 3 025 582 A1**

(12) **EUROPEAN PATENT APPLICATION**

(43) Date of publication:
**01.06.2016 Bulletin 2016/22**

(51) Int Cl.:
***A01K 29/00*** (2006.01)

(21) Application number: **15196905.2**

(22) Date of filing: **27.11.2015**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **27.11.2014 GB 201421106**

(71) Applicants:
• **David Ritchie (Implements) Limited
Forfat, Tayside DD8 3AT (GB)**
• **SRUC
Edinburgh, Lothian EH9 3JG (GB)**
• **Innovent Technology Limited
Turriff
Aberdeenshire AB53 4PA (GB)**

(72) Inventors:
• **RITCHIE, Robert
Suttieside, Forfar DD83BT (GB)**
• **ROSS, David
Penicuik, Midlothian EH25 9RG (GB)**
• **TROY, Shane
Penicuik, Midlothian EH25 9RG (GB)**
• **HYSLOP, James
Penicuik, Midlothian EH26 0PH (GB)**
• **HERON, Malcolm
Kirriemuir, Angus DD8 4PU (GB)**
• **BARCLAY, David
Ythanwells, Huntly AB54 6BH (GB)**

(74) Representative: **Peter, Kenneth William
K. W. Peter & Co.
Bush House
Edinburgh Technopole
Milton Bridge, Penicuik
Edinburgh, Midlothian EH26 0BB (GB)**

(54) **IMAGING ARRANGEMENT**

(57)    The present invention relates to an imaging arrangement for acquiring an image of a quadrupedal livestock animal. The imaging arrangement comprises a stall 32 configured to receive a quadrupedal livestock animal 36 and imaging apparatus 34 configured to acquire at least one image of a body of the quadrupedal livestock animal when the quadrupedal livestock animal is received in the stall 32. The stall 32 comprises first and second opposing sides 38, 40 between which the quadrupedal livestock animal 36 is received during operation of the imaging apparatus 34 such that the first and second opposing sides are on opposite sides of the quadrupedal livestock animal. The first and second opposing sides 38, 40 are configured such that, in use, they are: more widely spaced apart at a first location than the legs of the quadrupedal livestock animal whilst being more narrowly spaced apart than the sides of a trunk of the quadrupedal livestock animal; and more widely spaced apart than the sides of the trunk of the quadrupedal livestock animal at a second location spaced apart from the first location in a dorsal direction of the quadrupedal livestock animal.

Figure 4B

**Description**

Field of the Invention

The present invention relates to an imaging arrangement for acquiring an image of a livestock animal and in particular but not exclusively of a quadrupedal livestock animal such as a cow or a pig.

Background Art

It is known to acquire images of livestock animals for the like of body condition scoring and monitoring growth rate in livestock rearing environments. By way of example, US 2008/0273760 discloses apparatus for determining a body condition score for a livestock animal in dependence on images acquired from above and from the side of the livestock animal. The apparatus of US 2008/0273760 comprises a stall which receives the animal and a first camera disposed above the stall for acquiring an overhead image of the livestock animal and a second camera disposed at the side of the stall for acquiring a side image of the livestock animal.

The present inventors have appreciated apparatus such as that disclosed by US 2008/0273760 to have shortcomings. The present invention has been devised in the light of the inventors' appreciation of such shortcomings. It is therefore an object for the present invention to provide an improved imaging arrangement for acquiring an image of a livestock animal, the imaging arrangement comprising a stall for receiving a livestock animal and imaging apparatus configured to acquire at least one image of the livestock animal when received in the stall.

Statement of Invention

According to a first aspect of the present invention there is provided an imaging arrangement for acquiring an image of a quadrupedal livestock animal, the imaging arrangement comprising:

a stall configured to receive a quadrupedal livestock animal; and
imaging apparatus configured to acquire at least one image of a body of the quadrupedal livestock animal when the quadrupedal livestock animal is received in the stall,
the stall comprising first and second opposing sides between which the quadrupedal livestock animal is received during operation of the imaging apparatus such that the first and second opposing sides are on opposite sides of the quadrupedal livestock animal, the first and second opposing sides being configured such that, in use, they are: more widely spaced apart at a first location than the legs of the quadrupedal livestock animal whilst being more narrowly spaced apart than the sides of a trunk of the quadrupedal livestock animal; and more widely spaced apart than the sides of the trunk of the quadrupedal livestock animal at a second location spaced apart from the first location in a dorsal direction of the quadrupedal livestock animal.

The imaging arrangement for acquiring an image of a quadrupedal livestock animal, such as a cow or a pig, comprises a stall, e.g. at a water trough, configured to receive the quadrupedal livestock animal. The imaging arrangement further comprises imaging apparatus configured to acquire at least one image of a body of the quadrupedal livestock animal when the quadrupedal livestock animal is received in the stall. More specifically the imaging apparatus may be configured to acquire at least one image of at least one of the trunk and a neck of the quadrupedal livestock animal. An image of the trunk of the quadrupedal livestock animal may yield useful information although an image of the neck of the quadrupedal livestock animal may, in some circumstances, yield useful information. The stall comprises first and second opposing sides. The quadrupedal livestock animal, for example a cow or a pig, is received between the first and second opposing sides during operation of the imaging apparatus such that the first and second opposing sides are on opposite sides of the quadrupedal livestock animal.

The stall is configured such that the first and second opposing sides are more widely spaced apart at a first location than the legs and more specifically the outside of the legs of the quadrupedal livestock animal including the feet whilst being more narrowly spaced apart than the sides of a trunk of the quadrupedal livestock animal. The spacing between the first and second opposing sides at the first location may be such that the quadrupedal livestock animal is able to stand normally and yet be constrained in respect of movement in a lateral direction whereby the livestock animal is maintained within a field of view of the imaging apparatus. A wider spacing such as the spacing known from US 2008/0273760 which is wider than the sides of the trunk of the livestock animal may allow for an extent of lateral movement that is prejudicial to acquisition of images and further operation of the apparatus of US 2008/0273760.

The stall is further configured such that the spacing between the first and second opposing sides is wider than the sides of the trunk of the quadrupedal livestock animal at a second location spaced apart from the first location in a dorsal direction of the livestock animal. There may be no need for the spacing between the first and second opposing sides at the second location to be such that the first and second opposing sides are close to or to abut against the livestock animal on account of the lateral movement restraining effect of the first and second opposing sides at the first location. The more simply configured first and second opposing sides of US 2008/0273760, should, on the other hand, preferably be close fitting around the livestock animal to minimise lateral movement of the livestock animal. However, spacing the first and second opposing sides such that they abut against the trunk of the livestock animal is liable to distort the trunk and thereby compromise the properly representative nature of acquired images. An image of a distorted trunk may be less liable to yield a useful metric such as body condition score or weight estimation. The width of livestock animals varies and hence there may be an irreconcilable compromise in an arrangement according to US 2008/0273760 between a wider side spacing that mitigates the risk of distortion of the trunk of livestock animals and a narrower side spacing that restricts lateral movement of livestock animals.

The imaging arrangement may be configured such that the two first locations may be spaced apart from each other by a distance that is at least 1.25 times, 1.5 times, 1.75 times or 2 times the width of a typical gait footprint for the quadrupedal livestock animal. The imaging arrangement may be configured such that the two first locations may be spaced apart from each other by a distance that is no more than 2.25 times, 2 times, 1.75 times or 1.5 times the width of a typical gait footprint for the quadrupedal livestock animal. The inventors have found that a spacing between the two first locations of between 1.25 times and 2 times the width of a typical gait footprint may be appropriate for cattle. Such a spacing may provide for a compromise between limiting movement of a cow and unduly constraining the legs of the cow. In a certain form of the imaging arrangement the separation between the two first locations may be between 60 cm and 80 cm and more specifically may be 70 cm.

The first location may be at a height between the soles of the legs of the quadrupedal livestock animal and where the legs of the quadrupedal livestock animal join the trunk of the quadrupedal livestock animal. The second location may therefore be above the first location. At least one of the first and second opposing sides may define a profile which extends towards the opposing side as one progresses towards the distal end of the legs of the quadrupedal livestock animal. The profile may thus be downwardly and inwardly sloping. The profile may extend at an angle to the median plane of no more than 60 degrees, 50 degrees, 40 degrees, 35 degrees, 30 degrees or 25 degrees. The profile may extend at an angle to the median plane of no less than 20 degrees, 25 degrees, 30 degrees, 35 degrees, 40 degrees or 50 degrees. The inventors have found that a quadrupedal livestock animal is less liable to place a hoof or trotter on a more steeply sloping profile. The first and second opposing sides may be substantial mirror images of each other.

According to a first embodiment, each of the first and second opposing sides may be configured such that the first location may be at substantially the same height as distal ends of the legs of the quadrupedal livestock animal and more specifically substantially level with soles of the legs of the quadrupedal livestock animal. A separation between the first and second opposing sides may increase from the first location in a dorsal direction. The separation may increase progressively from the first location. Each of the first and second opposing sides may thus slope downwards and such that the first and second opposing sides may slope towards each other. The separation between the first and second opposing sides may cease to increase before the level of the trunk of the quadrupedal livestock animal is reached. More specifically the separation may cease to increase at knee level of the quadrupedal livestock animal. Thereafter and as described further below in respect of the second embodiment, the separation between the first and second opposing sides may be substantially constant after the separation ceases to increase.

As described above, at least one of the first and second opposing sides may define a profile which extends towards the opposing side as one progresses towards the distal end of the legs of the quadrupedal livestock animal. The present inventors have found that a profile which extends upwards and away from the median plane at an angle to the median plane of between 25 and 35 degrees and more specifically of 30 degrees may be appropriate for cattle. Where the profile extends at an angle of 30 degrees to the median plane the profile may extend at an angle of 60 degrees to the floor.

The stall may comprise an animal supporting arrangement. The animal supporting arrangement may comprise a floor on which the quadrupedal livestock animal stands during use of the imaging arrangement. The animal supporting arrangement may further comprise first and second arrangement sides with each extending in the dorsal direction from a respective opposite side of the floor. The floor may be between 60 cm and 80 cm wide and more specifically may be 70 cm wide. The inventors have found that a height of an arrangement side from the floor of between 200 mm and 1000 mm may be appropriate for the varying sizes of cattle types and ages liable to be of interest. In a certain form of the imaging arrangement the height of an arrangement side from the floor may be 496 mm. Each arrangement side may define at least in part the profile of a respective one of the first and second opposing sides. More specifically the animal supporting arrangement may be configured such that each arrangement side defines a part of the profile of a respective one of the first and second opposing sides. The rest of the profile of the respective one of the first and second opposing sides may be defined by part of the stall other than the animal supporting arrangement. The stall may therefore comprise opposing sides between which the animal supporting arrangement is disposed. The animal supporting arrangement may be removably received between the opposing sides of the stall. A conventional stall may therefore be adapted for use according to the present invention by way of the animal supporting arrangement.

According to a second embodiment, each of the first and second opposing sides may be configured such that the first location may be between a knee of the quadrupedal livestock animal and where the legs of the quadrupedal livestock animal join the trunk of the quadrupedal livestock animal. More specifically the first location may be adjacent and below where the legs of the quadrupedal livestock animal join the trunk of the quadrupedal livestock animal. The inventors have found that a separation from the ventral (i.e. floor) most end of the imaging arrangement to the first location of between 200 mm and 1000 mm may be appropriate for the varying sizes of cattle types and ages liable to be of interest. In a certain form of the imaging arrangement a separation from the ventral most end of the imaging arrangement to the first location may be 500 mm.

At least one of the first and second opposing sides may define a profile which extends towards the opposing side as one progresses in a ventral direction. The profile may extend obliquely to a median plane of the quadrupedal livestock animal. A median or mid-sagittal plane of the quadrupedal livestock animal may extend substantially orthogonally to the floor or ground on which the livestock animal stands. The median plane may extend between the tail and the head of the animal. More specifically the profile may extend in a ventral direction towards the opposing side. The profile may thus be downwardly sloping. The profile may, for example, be defined by a step that extends vertically up from a floor on which the quadrupedal livestock animal stands before sloping upwards and away from the quadrupedal livestock animal. The profile may thus extend inwardly as the width of the trunk decreases as one progresses in the ventral direction (i.e. in the floor direction) and thereby follow the profile of the underside of the trunk in a general fashion. According to the present embodiment, a more steeply sloping profile is less liable to follow the profile of the trunk of the quadrupedal livestock animal in a general fashion without abutting against the trunk and thereby distorting the trunk where differently shaped and sized livestock animals are being accommodated. A compromise between steepness and shallowness of sloping profile may depend on the variation in characteristics of the livestock animals being accommodated. The present inventors have found that a profile of between 60 and 70 degrees and more specifically of 65 degrees to the median plane may be appropriate for cattle. Where the profile extends at an angle of 65 degrees to the median plane the profile may extend at an angle of 25 degrees to the floor.

The first location may be defined by an elongate edge which extends in a cranial-caudal direction of the quadrupedal livestock animal. Each of the first and second opposing sides may therefore define a protrusion. As one progresses in a ventral direction of the quadrupedal livestock animal beyond the first location, a separation between the first and second opposing sides may increase. More specifically the first and second opposing sides beyond the first location may be more widely spaced apart than the sides of the trunk of the quadrupedal livestock animal.

At least one of the first and second sides may comprise a planar member. The planar member may be disposed such that an edge of the planar member defines the first location. The planar member may extend in a cranial-caudal direction of the quadrupedal livestock animal. More specifically the planar member may be of a length in the cranial-caudal direction greater than a length of the quadrupedal livestock animal. In a certain form of the imaging arrangement the planar member may be 2 m long. The planar member may be generally and more specifically substantially rectangular. In a certain form of the imaging arrangement the planar member may be 60 cm wide. A free edge of the planar member may define the first location. As described above, a planar member may define a surface profile which slopes in a ventral direction and towards the opposing planar member.

A part of at least one of the first and second sides may define a plane which is generally and more specifically substantially parallel to a median plane of the quadrupedal livestock animal. The second location may be on the part of at least one of the first and second sides which defines a substantially parallel plane. The plane defined by the side may extend in a dorsal direction from the first location defining profile described above. Each of the first and second sides may therefore comprise a portion which extends vertically from the top of the imaging apparatus down to the first location defining profile. As described above, the portions of the first and second sides may be more widely spaced apart than the sides of the trunk of the quadrupedal livestock animal.

According to at least one of the first and second embodiments, the first and second opposing sides may extend in the dorsal direction such that the first and second opposing sides are at least at eye level of the quadrupedal livestock animal. The inventors have found that having first and second opposing sides of such height reduces the likelihood of the attention of the quadrupedal livestock animal being caught and the quadrupedal livestock animal thereby becoming restless.

The imaging arrangement may be configured such that the second locations may be spaced apart from each other by a distance that is at least 1.25 times, 1.5 times, 1.75 times or 2 times the width of the trunk of the quadrupedal livestock animal. The imaging arrangement may be configured such that the two second locations may be spaced apart from each other by a distance that is no more than 2.25 times, 2 times, 1.75 times or 1.5 times the width of the trunk of the quadrupedal livestock animal. Having second locations that are sufficiently far apart may reduce the likelihood of parts of the first and second opposing sides being mistaken in acquired images for features of the quadrupedal livestock animal. On the other hand, having second locations that are sufficiently close together may help contain the quadrupedal livestock animal so as to ease acquisition of images. The inventors have found that a spacing between the two second locations of between 1.25 times and 2 times the width of the trunk may be advantageous for cattle.

The quadrupedal livestock animal may be an ungulate mammal such as a cow, a pig or a deer. The stall may be configured accordingly in respect of the first and second opposing sides. The quadrupedal livestock animal may be a ruminant such as a cow, a sheep or a goat. The quadrupedal livestock animal may be monogastric animal such as a pig. The stall may be configured in respect of the first and second opposing sides to receive at least one of a ruminant and a monogastric animal.

The imaging apparatus may be configured to acquire at least one image of the quadrupedal livestock animal from above. The imaging apparatus may comprise a camera disposed so as to acquire at least one image of the quadrupedal livestock animal from above. The camera may be disposed in the apparatus such that it is above the quadrupedal livestock animal when the quadrupedal livestock animal is received in the stall. More specifically, the camera may be disposed in the apparatus such that it is between 0.25 m and 3 m above the uppermost part of the trunk of the quadrupedal livestock animal. The camera may be disposed such that is directly overhead the quadrupedal livestock animal. The camera may be operative in three dimensions and may be a time of flight camera of a form as described in US 2008/0273760. Alternatively or in addition the camera may be a terahertz camera. A terahertz camera may be capable of determining body features of hairy quadrupedal livestock animals, such as hairy cattle, that may be obscured otherwise.

The imaging apparatus may further comprise image processing apparatus which is operative to determine at least one metric for the quadrupedal livestock animal in dependence on at least one image acquired by the imaging apparatus. The at least one metric may comprise a body condition score for the quadrupedal livestock animal as described in US 2008/0273760. Alternatively or in addition at least one metric may comprise a weight estimation for the quadrupedal livestock animal. Weight may be estimated in dependence on plural measurements derived from the image of the body of the quadrupedal livestock animal. The plural measurements may comprise: at least one width of the body; at least one height of the body; at least one length of the body; at least one area of the body; and at least one volume of the body.

According to a second aspect of the present invention there is provided a measurement arrangement which defines a path for a quadrupedal livestock animal to follow and which comprises an imaging arrangement according to the first aspect of the present invention, the imaging arrangement being configured to acquire at least one image of the quadrupedal livestock animal when in the path. The path defined by the measurement arrangement may be configured to constrain movement of the quadrupedal livestock animal such as in a predetermined direction at any one time. The measurement arrangement may further comprise a weighing arrangement which is operative to weigh the quadrupedal livestock animal when in the path.

According to a third aspect of the present invention there is provided a method of acquiring an image of a quadrupedal livestock animal, the method comprising:

receiving a quadrupedal livestock animal between first and second opposing sides of a stall, the first and second opposing sides being configured such that they are: more widely spaced apart at a first location than the legs of the quadrupedal livestock animal whilst being more narrowly spaced apart than the sides of a trunk of the quadrupedal livestock animal; and more widely spaced apart than the sides of the trunk of the quadrupedal livestock animal at a second location spaced apart from the first location in a dorsal direction of the quadrupedal livestock animal; and acquiring at least one image of a body of the quadrupedal livestock animal when the quadrupedal livestock animal is received between the first and second opposing sides.

Embodiments of the third aspect of the present invention may comprise one or more features of any other aspect of the present invention.

According to a further aspect of the present invention there is provided an imaging arrangement for acquiring an image of a quadrupedal livestock animal, the imaging arrangement comprising: a stall configured to receive a quadrupedal livestock animal; and imaging apparatus configured to acquire at least one image of a body of the quadrupedal livestock animal when the quadrupedal livestock animal is received in the stall, the stall comprising first and second opposing sides between which the quadrupedal livestock animal is received during operation of the imaging apparatus such that the first and second opposing sides are on opposite sides of the quadrupedal livestock animal, the first and second opposing sides being configured such that they are more widely spaced apart than the legs of the quadrupedal livestock animal whilst being more narrowly spaced apart than the sides of a trunk of the quadrupedal livestock animal at a location between the soles of the feet of the quadrupedal livestock animal and where the legs of the quadrupedal livestock animal join the trunk of the quadrupedal livestock animal.

More specifically the first and second opposing sides may be more widely spaced apart than the legs of the quadrupedal livestock animal whilst being more narrowly spaced apart than the sides of the trunk of the quadrupedal livestock animal at a location at the same height as distal ends of the legs of the quadrupedal livestock animal and more specifically substantially level with soles of the legs of the quadrupedal livestock animal. The first and second opposing sides may be spaced apart more widely than the sides of the trunk of the livestock animal in a dorsal direction from the distal ends of the legs of the quadrupedal livestock animal.

Alternatively the first and second opposing sides may be more widely spaced apart than the legs of the quadrupedal livestock animal whilst being more narrowly spaced apart than the sides of the trunk of the quadrupedal livestock animal at a location near and perhaps adjacent where the legs of the quadrupedal livestock animal join the trunk of the quadrupedal livestock animal. The location may be between the knees of the legs of the quadrupedal livestock animal and where the legs of the quadrupedal livestock animal join the trunk of the quadrupedal livestock animal. The location may be adjacent and below where the legs of the quadrupedal livestock animal join the trunk of the quadrupedal livestock animal. The first and second opposing sides may be spaced apart more widely than the sides of the trunk of the livestock animal in a dorsal direction above where the legs of the quadrupedal livestock animal join the trunk of the quadrupedal livestock animal. Further embodiments of the further aspect of the present invention may comprise one or more features of the first aspect of the present invention.

According to a yet further aspect of the present invention there is provided an imaging arrangement for acquiring an image of a quadrupedal livestock animal, the imaging arrangement comprising: a stall configured to receive a quadrupedal livestock animal; and imaging apparatus configured to acquire at least one image of a trunk of the quadrupedal livestock animal when the quadrupedal livestock animal is received in the stall, the imaging apparatus comprising a terahertz camera.

Embodiments of the yet further aspect of the present invention may comprise one or more features of any previous aspect of the present invention.

Brief Description of Drawings

Further features and advantages of the present invention will become apparent from the following specific description, which is given by way of example only and with reference to the accompanying drawings, in which:

Figure 1 is a block diagram of an imaging arrangement according to the present invention;
Figure 2A is a plan view of a stall and a camera comprised in the imaging arrangement of Figure 1 according to an embodiment;
Figure 2B is front view of the stall and camera of Figure 2A with a cow undergoing imaging;
Figure 3 is a plan view of a measurement arrangement comprising the imaging arrangement of Figure 1;
Figure 4A is a plan view of a stall and a camera comprised in the imaging arrangement of Figure 1 according to another embodiment;
Figure 4B is front view of the stall and camera of Figure 4A with a cow undergoing imaging;
Figure 4C is an isometric view of the imaging arrangement according to the embodiment of Figure 4A; and
Figure 5 shows an image of a cow acquired by way of an imaging arrangement according to the present invention.

Description of Embodiments

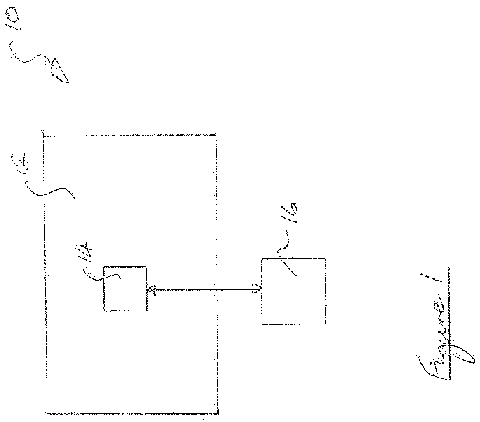

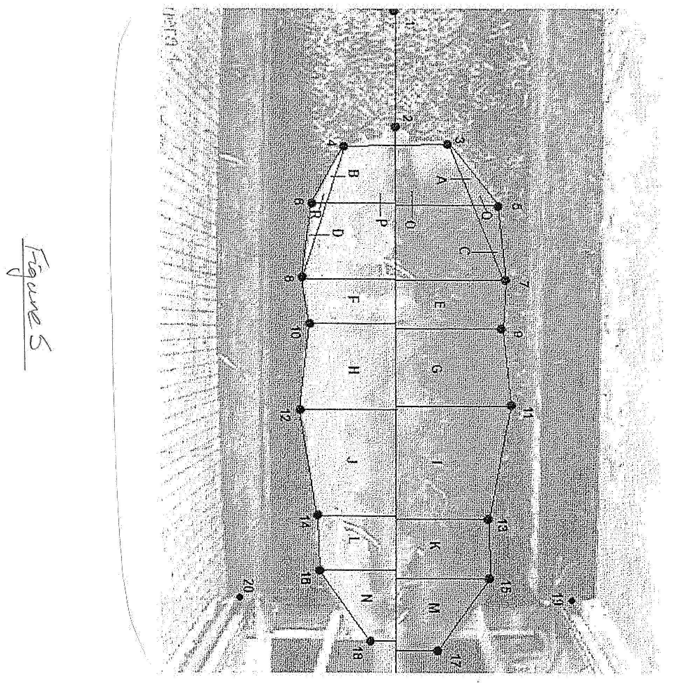

A block diagram of an imaging arrangement 10 according to the present invention is shown in Figure 1. The imaging arrangement 10 comprises a stall 12 for receiving a cow and a camera 14 which is operative to acquire an image of the cow received in the stall. The imaging arrangement further comprises a computer 16 (which constitutes image processing apparatus) which is operative to receive acquired images from the camera and to perform analysis of the received images to arrive at a body condition score for the cow. Operation of the camera 14 is by way of the computer 16. Performing of analysis of the received images to arrive at a body condition score is described in US 2008/0273760. Performing of analysis of the received images to provide weight estimation is described below with reference to Figure 5. The camera and the computer together constitute imaging apparatus. Although not shown, each cow has an RFID tag and the imaging arrangement 10 comprises an RFID reader whereby a particular cow in the stall 12 is identified.

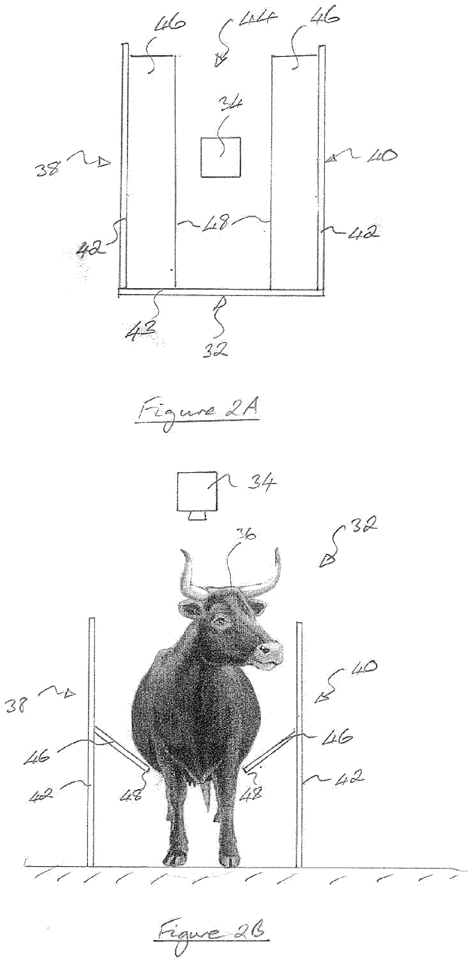

A plan view of a stall 32 and a camera 34 comprised in the imaging arrangement of Figure 1 according to a first embodiment is shown in Figure 2A. A front view of the stall and camera of Figure 2A with a cow 36 undergoing imaging is shown in Figure 2B. With reference to Figures 2A and 2B, the stall comprises first and second opposite sides 38, 40 between which the cow 36 is received. The camera 34 is supported above the stall, for example from a frame (not shown), such that the trunk of the cow 36 is within the field of view of the camera. In certain forms, the camera 34 is configured and supported such that the neck of the cow 36 is within the field of view of the camera. In certain circumstances an image of the neck yields useful information. The camera is a time of flight camera of a form as described in US 2008/0273760. Alternatively the camera is a terahertz camera such as an IR/V-T0831C from NEC.

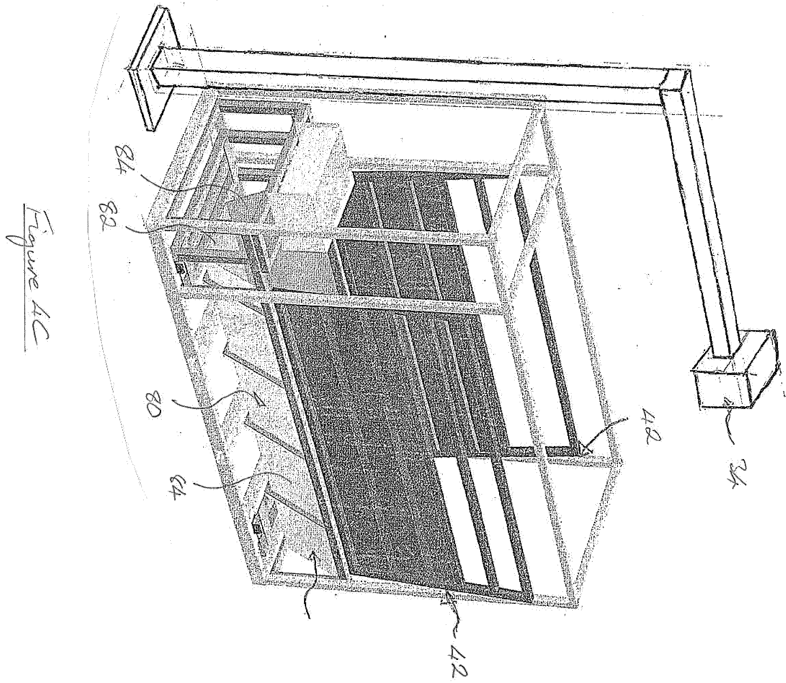

Each of the first and second opposite sides 38, 40 comprises a planar metal frame 42 of conventional form which extends from the ground on which the imaging arrangement is supported to eye level at least of cattle to be imaged. The stall 32 further comprises a front 43 which is formed from a planar metal frame of conventional form and which also extends from the ground on which the imaging arrangement is supported at least to eye level of cattle to be imaged. The front 43 is omitted from Figure 2B. Although not shown in Figures 2A and 2B but shown in Figure 4C, the stall 32 comprises a feed or water bin. The rear 44 is open whereby a cow can be admitted to the space between the first and second opposite sides 38, 40. Each of the first and second opposite sides 38, 40 further comprises an elongate rectangular planar member 46 which is attached along one long edge to its respective planar metal frame 42 such that the rectangular planar member extends along the length of the stall 32 and the long free edge 48 of the rectangular planar member protrudes into the space between the first and second opposite sides. Each free edge 48 constitutes a first location on a side 38, 40. The part of each planar metal frame 42 extending up from its respective rectangular planar member 46 constitutes a second location on a side 38, 40. As can be appreciated from Figure 2B, each rectangular planar member 46 extends obliquely towards its opposing rectangular planar member in the ventral direction of the cow, i.e. towards the ground, such that the long free edge 48 is 500 mm above the ground and is at a level where the legs of the cow join the trunk of the cow. Each rectangular planar member 46 is 2m long, 60 cm wide and defines an angle of 65 degrees with the respective planar metal frame 42 to which it is attached. The separation between the two long free edges 48 is 70 cm which is 1.5 times a typical gait footprint for cattle to be imaged. In an alternative un-illustrated embodiment, each rectangular planar member 46 does not terminate in a long free edge 48. Instead each of the first and second opposite sides 38, 40 comprises a further planar member which extends substantially vertically from the distal edge of the rectangular planar member 46 to the ground. Otherwise the form and function of the alternative embodiment is the same as the embodiment shown in Figures 2A and 2B.

Operation of the imaging arrangement will now be described with reference to the aforegoing Figures. A cow 36 is admitted to the space between the first and second opposite sides 38, 40. As can be appreciated from Figure 2B, the cow's 36 position is constrained by the rectangular planar members 46 which limit an extent to which the cow can move in a lateral direction. The cow is thus maintained within a field of view of the camera 34. The downward slope of the rectangular planar members 46 in relation to the trunk of the cow is such as to contain the trunk without abutting against the trunk and thereby distorting the shape of the trunk. Lack of distortion of the trunk provides for acquisition of a more representative image. When the cow 36 is properly received between the first and second opposite sides 38, 40, the computer 16 is operative to control the camera 14, 34 which in turn is operative to acquire at least one image of the trunk from above. The acquired at least one image is then received by the computer 16 wherein image analysis is performed and a body condition score is determined in accordance with the content of US 2008/0273760.

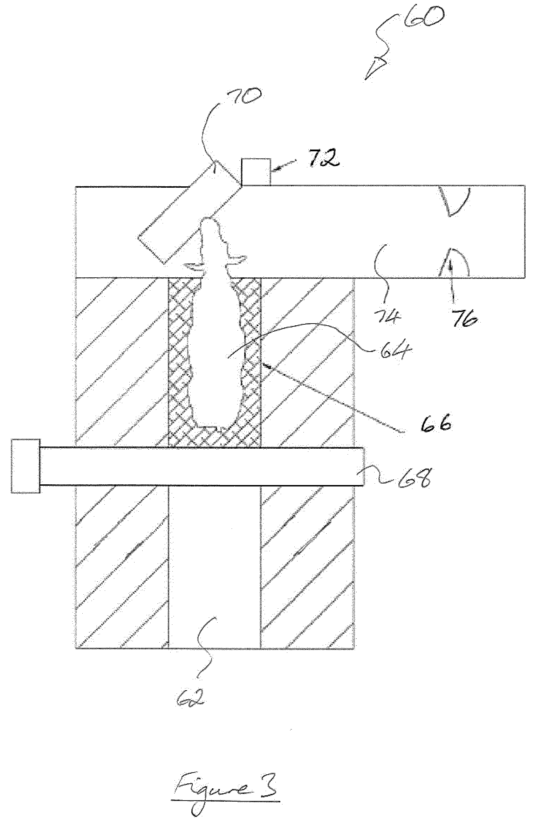

A measurement arrangement 60 comprising the imaging arrangement of Figure 1 is shown in Figure 3. The measurement arrangement 60 defines a walk-in path 62 along which a cow 64 progresses to an imaging area 66. A gantry 68 supports a camera above the imaging area 66 with the camera being oriented such that the trunk and perhaps also the neck of the cow 64 is within the field of view of the camera. The camera is operative as described above to acquire at least one image of the trunk and perhaps also the neck of the cow 64. The imaging area 66 is bounded on opposite sides by first and second opposite sides 38, 40 of a form as described above with reference to Figures 2A and 2B. The measurement arrangement 60 further comprises a weigh platform defining the floor of the imaging area 66. The weigh platform is operative to measure the weight of the cow 64 with the weight measurement being received in and processed by the computer 16 of Figure 1. The measurement arrangement 60 yet further comprises a water or feed trough 70 which is located such that the cow 64 can feed from the trough 70 when the cow is in the imaging area 66. In addition the measurement arrangement 60 comprises a Radio-frequency Identification (RFID) reader 72 which is located beside the trough 70 and sufficiently close to the cow 66 when present in the imaging area 66 to read from an RFID tag on the cow 64. Measurements may thus be properly matched with members of a herd. Upon completion of the measurements, the computer 16 of Figure 1 is operative to determine a body condition score and a live-weight estimate for the cow 64 and is further operative to save or output to an operator body condition score data and weight data for the cow 64. The cow 64 then leaves the imaging area 66 by way of a walk-out path 74 comprising a non-return gate 76 which is operative to prevent the cow from returning to the imaging area 66.

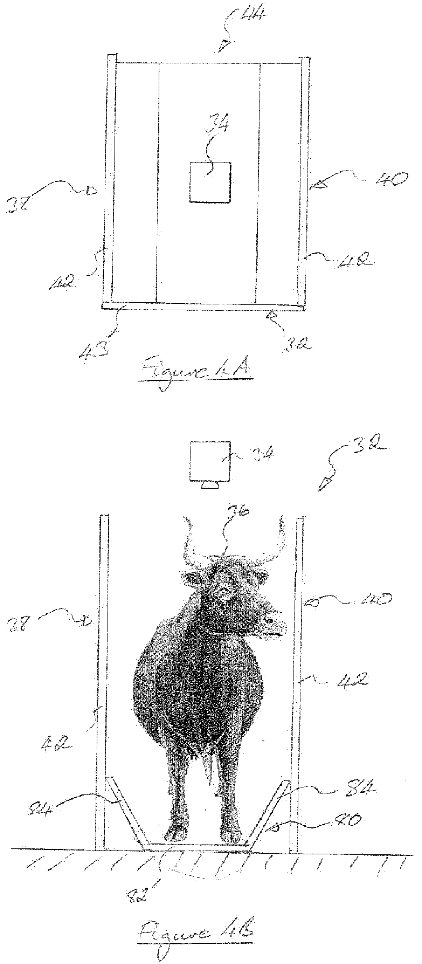

A plan view of a stall 32 and a camera 34 comprised in the imaging arrangement of Figure 1 according to a second embodiment is shown in Figure 4A. A front view of the stall and camera of Figure 4A with a cow 36 undergoing imaging is shown in Figure 4B. An isometric view of the second embodiment is shown in Figure 4C. Components of the second embodiment in common with the first embodiment are designated with like reference numerals. The reader is directed to the description provided above with reference to Figures 2A and 2B for a description of such common components. Differences in respect of the second embodiment will now be described. Instead of the elongate rectangular planar members 46 of the first embodiment, the second embodiment comprises an animal supporting arrangement 80. The animal supporting arrangement 80 comprises a floor 82 on which the cow 36 stands during use of the imaging arrangement. The floor is 70 cm wide whereby the floor is wider than the gait footprint of the cow but narrower than the width of the trunk of the cow. The animal supporting arrangement 80 further comprises first and second arrangement sides 84. Each arrangement side 84 is constituted by a planar member which extends upwards in the dorsal direction of the cow 36 and towards a respective one of the more widely spaced frames 42 of the stall. Each arrangement side 84 extends at an angle of 60 degrees in relation to the floor 82 and to a height of 496 mm above the floor. The animal supporting arrangement 84 is removably received between the frames 42 of the stall whereby a stall of conventional form is adapted for use according to the present invention by way of the animal supporting arrangement. As can be appreciated from Figure 4B, the hooves of the cow 36 are confined to the horizontal area defined by the floor 82 between the sloping arrangement sides 84 to thereby constrain an extent to which the cow can move in a lateral direction. The cow is thus maintained within a field of view of the camera 34. Otherwise the form and function of the second embodiment is the same as the first embodiment.

Analysis of an image of the cow to provide weight estimation will now described with reference to Figure 5. Figure 5 shows an image of a cow acquired by way of an imaging arrangement according to the present invention. As can be seen from Figure 5, points on the perimeter of the image of the body of the cow are designated by numbers. Furthermore the image of the body of the cow is divided up into plural areas which are indicated by letters A to R. The locations and areas are determined by way of firmware running on the computer 16 of Figure 1. The firmware is further operative to determine the following measurements and in dependence thereon to determine a live weight estimate for the cow. The design of firmware to perform these operations is within the ordinary design capabilities of the person skilled in the art.

The areas shown in Figure 5 are distributed on each side of a centre line which passes through point 2, which is located at the centre of the tail of the cow, and between points 17 and 18 at the neck of the cow. The following areas are determined with it being noted that areas A, B, C and D extend to the outline points, areas O and P do not include areas Q and R respectively and areas Q and R include the respective adjoining triangular area. Linear measurements are in mm, areas are in mm$^2$ and volumes are in mm$^3$. The live-weight estimation, SlaLW, is determined in accordance with:

$$\text{SlaLW} = 9.91 + (0.001364 \times V) - (0.405 \times W2) + (0.0365 \times \text{LCENTRE}) + (0.000677 \times I) - (0.870 \times W4) + (0.000000184 \times \text{VBELLY}) - (300 \times R) + (0.00064 \times B) - (0.000445 \times C) + (0.0022 \times R) + (0.000368 \times L) + (0.295 \times W3)$$

where V is the total area, W2 is the width between points 5 and 6, LCENTRE is the length of the animal from the tail along the centre line to the line between points 9 and 10, I is the area of the animal designated by I in Figure 5, W4 is the width between points 9 and 10, VBELLY is the volume of the belly of the animal under areas designated in Figure 5 by G, I, H and J, R is the ratio of the rear area, S, to the sum of the belly area, T, and the shoulder area, U, (i.e. R = S/(T + U), B is the area of the animal designated by B, C is the area of the animal designated by C, R is the area of the animal designated by R, L is the area of the animal designated by L and W3 is the width between points 7 and 8.

The volume of the belly, VBELLY, is determined by modelling the belly as cylinder having a height, H, between a line between points 9 and 10 and a line between points 3 and 14 and a width, W, between points 11 and 12 such that VBELLY = $\pi$ (W/2)$^2$ H. The rear area, S, is the sum of the areas of A, B, C, D, E and F. The belly area, T, is the sum of the areas of G, I, H and J. The shoulder area, U, is the sum of the areas of K, L, M and N.

## Claims

1. An imaging arrangement for acquiring an image of a quadrupedal livestock animal, the imaging arrangement comprising:

   a stall configured to receive a quadrupedal livestock animal; and
   imaging apparatus configured to acquire at least one image of a body of the quadrupedal livestock animal when the quadrupedal livestock animal is received in the stall,
   the stall comprising first and second opposing sides between which the quadrupedal livestock animal is received during operation of the imaging apparatus such that the first and second opposing sides are on opposite sides of the quadrupedal livestock animal, the first and second opposing sides being configured such that, in use, they are: more widely spaced apart at corresponding first locations on the first and second opposing sides than the legs of the quadrupedal livestock animal whilst being more narrowly spaced apart than the sides of a trunk of the quadrupedal livestock animal; and more widely spaced apart than the sides of the trunk of the quadrupedal livestock animal at corresponding second locations on the first and second opposing sides spaced apart from the first locations in a dorsal direction of the quadrupedal livestock animal.

2. The imaging arrangement according to claim 1 configured such that the two first locations are spaced apart from each other by a distance of between 1.25 times and 2 times the width of a typical gait footprint of the livestock animal.

3. The imaging arrangement according to claim 1 or 2 in which a separation between the two first locations is between 600 mm and 800 mm.

4. The imaging arrangement according to any one of the preceding claims in which each of the first and second opposing sides defines a profile which extends towards the other opposing side as one progresses towards a floor of the stall whereby the profile is downwardly and inwardly sloping.

5. The imaging arrangement according to any one of the preceding claims in which each of the first and second opposing sides is configured such that the first location is at substantially at floor level of the stall and a separation between the first and second opposing sides increases from the first location in a dorsal direction.

6. The imaging arrangement according to claim 5 in which the separation between the first and second opposing sides ceases to increase before the level of the trunk of the quadrupedal livestock animal is reached.

7. The imaging arrangement according to claim 5 or 6 in which each of the first and second opposing sides defines a profile which extends towards the other opposing side as one progresses towards a floor of the stall, the profile extending upwards and away from the median plane at an angle to the median plane of between 25 and 35 degrees.

8. The imaging arrangement according to any one of claims 5 to 7 in which the stall comprises an animal supporting arrangement, the animal supporting arrangement comprising a floor on which the quadrupedal livestock animal stands during use of the imaging arrangement and first and second arrangement sides which each extend in the dorsal direction from a respective opposite side of the floor.

9. The imaging arrangement according to any one of the preceding claims in which each of the first and second sides comprises a portion defining a plane which is generally orthogonal to a floor of the stall, each second location being on a respective portion, the portions being more widely spaced apart than the sides of the trunk of the quadrupedal livestock animal.

10. The imaging arrangement according to claim 9 in which the portions are spaced apart from each other by between 1.25 times and 2 times the width of the trunk of the quadrupedal livestock animal.

11. The imaging arrangement according to claim 9 or 10 in which each of the first and second opposing sides extends in the dorsal direction such that each of the first and second opposing sides are at least at eye level of the quadrupedal livestock animal.

12. The imaging arrangement according to any one of the preceding claims in which the imaging apparatus comprises a camera disposed so as to acquire at least one image of the quadrupedal livestock animal from above.

13. The imaging arrangement according to any one of the preceding claims in which the imaging apparatus comprises image processing apparatus which is operative to determine at least one metric for the quadrupedal livestock animal in dependence on at least one image acquired by the imaging apparatus.

14. A measurement arrangement which defines a path for a quadrupedal livestock animal to follow and which comprises an imaging arrangement according to any one of the preceding claims, the imaging arrangement being configured to acquire at least one image of the quadrupedal livestock animal when in the path.

15. A method of acquiring an image of a quadrupedal livestock animal, the method comprising:

receiving a quadrupedal livestock animal between first and second opposing sides of a stall, the first and second opposing sides being configured such that they are: more widely spaced apart at a first location than the legs of the quadrupedal livestock animal whilst being more narrowly spaced apart than the sides of a trunk of the quadrupedal livestock animal; and more widely spaced apart than the sides of the trunk of the quadrupedal livestock animal at a second location spaced apart from the first location in a dorsal direction of the quadrupedal livestock animal; and

acquiring at least one image of a body of the quadrupedal livestock animal when the quadrupedal livestock animal is received between the first and second opposing sides.

Figure 1

Figure 2A

Figure 2B

Figure 3

Figure 4A

Figure 4B

Figure 4C

Figure 5

Europäisches
Patentamt

European
Patent Office

Office européen
des brevets

# EUROPEAN SEARCH REPORT

Application Number

EP 15 19 6905

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 03/006919 A2 (RMS RES MAN SYSTEMS USA INC [US]) 23 January 2003 (2003-01-23) * paragraphs [0007] - [0021] * * figures 1-3 * | 1-15 | INV. A01K29/00 |
| X | US 4 745 472 A (HAYES NORMAN J [US]) 17 May 1988 (1988-05-17) * column 1, line 1 - column 3, line 33 * * figures 1-2 * | 1-15 | |
| Y,D | US 2008/273760 A1 (METCALFE LEONARD [CA] ET AL) 6 November 2008 (2008-11-06) * the whole document * | 1-15 | |
| Y | WO 2012/040782 A1 (DOYLE JOHN CONAN [AU]) 5 April 2012 (2012-04-05) * page 7, line 1 - page 9, line 13 * * page 12, line 31 - page 13, line 24 * * figures 2-3 * | 1-15 | |

|  | TECHNICAL FIELDS SEARCHED (IPC) |
|---|---|
|  | A01K |

The present search report has been drawn up for all claims

| Place of search | Date of completion of the search | Examiner |
|---|---|---|
| The Hague | 18 April 2016 | Batres Arnal, Lucía |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 15 19 6905

This annex lists the patent family members relating to the patent documents cited in the above-mentioned European search report.
The members are as contained in the European Patent Office EDP file on
The European Patent Office is in no way liable for these particulars which are merely given for the purpose of information.

18-04-2016

| Patent document cited in search report | | Publication date | Patent family member(s) | | Publication date |
|---|---|---|---|---|---|
| WO 03006919 | A2 | 23-01-2003 | AU 2002320553 A1<br>US 2003024481 A1<br>WO 03006919 A2 | | 29-01-2003<br>06-02-2003<br>23-01-2003 |
| US 4745472 | A | 17-05-1988 | CA 1172029 A<br>US 4745472 A | | 07-08-1984<br>17-05-1988 |
| US 2008273760 | A1 | 06-11-2008 | CA 2684498 A1<br>EP 2146637 A1<br>RU 2009141928 A<br>US 2008273760 A1<br>WO 2008134886 A1 | | 13-11-2008<br>27-01-2010<br>10-06-2011<br>06-11-2008<br>13-11-2008 |
| WO 2012040782 | A1 | 05-04-2012 | AR 083253 A1<br>AU 2011308085 A1<br>CA 2812151 A1<br>NZ 608329 A<br>US 2013179088 A1<br>WO 2012040782 A1 | | 13-02-2013<br>04-04-2013<br>05-04-2012<br>29-08-2014<br>11-07-2013<br>05-04-2012 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20080273760 A